# EUROPEAN PATENT APPLICATION

(11) **EP 3 413 546 A1**
(43) Date of publication of application: **12.12.2018**
(21) Application number: 16889479.8
(22) Date of filing: 09.03.2016
(51) Int. Cl.: H04M 1/725, G06F 17/27

(54) **MOBILE TERMINAL AND CONTROL METHOD THEREFOR**

(30) Priority: 03.02.2016 KR 20160013689
(71) Applicant: LG Electronics Inc., Seoul 07336 (KR)
(72) Inventor: CHOI, Haengkeol, Seoul 06772 (KR); LEE, Jinho, Seoul 06772 (KR)
(74) Representative: Beyer, Andreas
(86) International application number: PCT/KR2016/002353
(87) International publication number: WO 2017/135501

(57) **Abstract**

Disclosed herein are a mobile terminal having a memo function and a control method therefor. The present application may provide a mobile terminal and a control method therefor, the mobile terminal comprising: a display configured to display various information; a communication device configured to communicate with an external device or a network; and a controller connected with the display and the communication device, wherein the controller may be configured to analyze a content of a created memo, and perform an operation associated with the analyzed content.

## Description

### TECHNICAL FIELD

The present application relates to a mobile terminal, and more particularly, to a mobile terminal and control method thereof.

### BACKGROUND ART

Terminals may be generally classified as mobile/portable terminals or stationary terminals according to their mobility. Mobile terminals may also be classified as handheld terminals or vehicle mounted terminals according to whether or not a user can directly carry the terminal.

A display device is a device equipped with functions of receiving, processing and displaying user-viewable images. The display device receives a broadcast selected from broadcast signals broadcasted by a broadcasting station, separates a video signal from the received signal, and displays the separated video signal on a display.

Recently, owing to the developments of broadcast and network technologies, functions of a display device have been considerably diversified and performance of the device has been improved correspondingly. Namely, the display device has been developed so as to provide various substances to a user as well as a simply broadcasted broadcast. For example, the display device can provide game play, listening to music, internet shopping, user-customized information and the like using various applications as well as programs received from broadcasting stations. In order to perform such extended functions, the display device is basically connected to other devices or a network using various communication protocols and is able to provide ubiquitous computing environments to a user. Namely, the display device has been evolved into a smear device that enables connectivity to a network and ubiquitous computing.

Among many functions of a mobile terminal, a memo function enables a user to record simple information in order to refer to them if necessary. The user uses a desired function of the mobile terminal by referring to a substance of a frequently recorded memo. However, the memo function of the mobile terminal generally provides a function of a simple primary recording only. Thus, the memo function needs to be improved so that a user can use the mobile terminal more conveniently.

### DISCLOSURE OF THE INVENTION

### TECHNICAL TASKS

Accordingly, the present invention is directed to substantially obviate one or more problems due to limitations and disadvantages of the related art. One technical task of the present invention is to provide a mobile terminal having an improved memo function and control method thereof.

### TECHNICAL SOLUTIONS

In one technical aspect of the present invention, provided herein is a mobile terminal, including a display configured to display various kinds of informations, a communication device configured to communicate with an external device or a network, and a controller connected to the display and the communication device, wherein the controller is configured to analyze a substance of a created memo and perform an operation related to the analyzed substance.

The controller may analyze a keyword and context of the substance of the memo. And, the controller may segment substances of the memo into parts associated with each other contextually.

The controller may group an application relevant to the substance of the memo together with the memo based on the analyzed substance. The controller may dispose the application relevant to the analyzed substance and the memo in a same folder or home screen. The controller may adjacently dispose the application relevant to the analyzed substance and the memo on a wallpaper. The controller may add the memo to a folder having the relevant application disposed therein or create a new folder to dispose the relevant application and the memo therein. The controller may group only a part relevant to the application in the substance of the memo with the application. If the grouped application is executed, the controller may send the substance of the grouped memo to the executed application. The controller may send only a part relevant to the executed application in the substance of the grouped memo to the executed application.

Moreover, if an application is executed, the controller may search analyzed substances of a previously created memo and then send parts relevant to the executed application to the executed application. After searching the analyzed substances, the controller may first display the parts to send for a user.

The controller may directly execute an application relevant to the substance of the memo based on the analyzed substance. The controller may select the application to execute using a keyword of the memo substance and determine a job to be performed in the application through a context of the memo substance. The controller may additionally search for information, which is missing from the memo, required for the execution of the application.

The controller may be configured to dispose the created memo on a lock screen or a turned-off screen. And, the controller may be configured to display substances of the disposed memos on the lock screen or the turned-off screen.

### ADVANTAGEOUS EFFECTS

According to the present invention, a mobile terminal can dispose a memo and an application at a prescribed location together. If a prescribed application is executed, the mobile terminal can send a substance of a memo relevant to it using the executed application. Once a memo is created, the mobile terminal can directly execute an application related to a substance of the memo. Therefore, the mobile terminal can substantially link the substance of the memo and a function of the memo to each other, whereby a user can use the mobile terminal conveniently.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### DESCRIPTION OF DRAWINGS

FIG. 1 is a block diagram showing a configuration of a mobile terminal described in the present application.
FIG. 2 and FIG. 3 are diagrams for one example of a mobile terminal viewed in different directions, respectively.
FIG. 4 is a flowchart for one example of a method of controlling a mobile terminal described in the present application.
FIG. 5 is a flowchart showing an analyzing step of FIG. 4 in detail.
FIG. 6 is a flowchart showing a method of grouping a memo and application for example of a performing step of FIG. 4 in detail.
FIG. 7 is a schematic diagram of disposing a memo and application in the same folder as an actual example of the grouping of FIG. 6.
FIG. 8 is a schematic diagram of disposing a memo and application on the same home screen as an actual example of the grouping of FIG. 6.
FIG. 9 is a schematic diagram of disposing a memo and application on a wallpaper as an actual example of the grouping of FIG. 6.
FIG. 10 is a flowchart of a method of bringing a substance of a relevant memo when an application is executed as one example of the performing step of FIG. 4.
FIG. 11 and FIG. 12 are schematic diagrams showing an actual example of a control method according to FIG. 10.
FIG. 13 is a flowchart showing a method of if a memo is created, executing an application related to the memo, in detail, as one example of the performing step of FIG. 4.
FIG. 14 is a schematic diagram showing an actual example of a control method according to FIG. 13.
FIG. 15 is a schematic diagram showing an actual example of a method of disposing a created memo on a turn-off screen or a lock screen of a mobile terminal.
FIG. 16 is a schematic diagram showing an actual example of a method of displaying a created memo on a lock screen of a mobile terminal.
FIG. 17 is a schematic diagram showing an actual example of a method of displaying a created memo on a turn-off screen of a mobile terminal.

### BEST MODE FOR INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a term such as "module" and "unit" may be used to refer to elements or components. Use of such a term herein is merely intended to facilitate description of the specification, and the term itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first (1st), second (2nd), etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "comprise", "include" or "have" are used herein and should be understood that they are intended to indicate an existence of several components, functions or steps, disclosed in the specification, and it is also understood that greater or fewer components, functions, or steps may likewise be utilized. Moreover, due to the same reasons, it is also understood that the present application includes a combination of features, numerals, steps, operations, components, parts and the like partially omitted from the related or involved features, numerals, steps, operations, components and parts described using the aforementioned terms unless deviating from the intentions of the disclosed original invention.

Smart devices presented herein may be implemented using a variety of different types of terminals. Examples of such terminals include cellular phones, smart phones, laptop computers, digital broadcast terminals, personal digital assistants (PDAs), portable multimedia players (PMPs), navigators, slate PCs, tablet PCs, ultrabooks, wearable devices (for example, smart watches, smart glasses, head mounted displays (HMDs)), and the like. By way of non-limiting example only, further description will be made with reference to particular types of smart devices. However, such teachings apply equally to other types of smart devices, such as those types noted above.

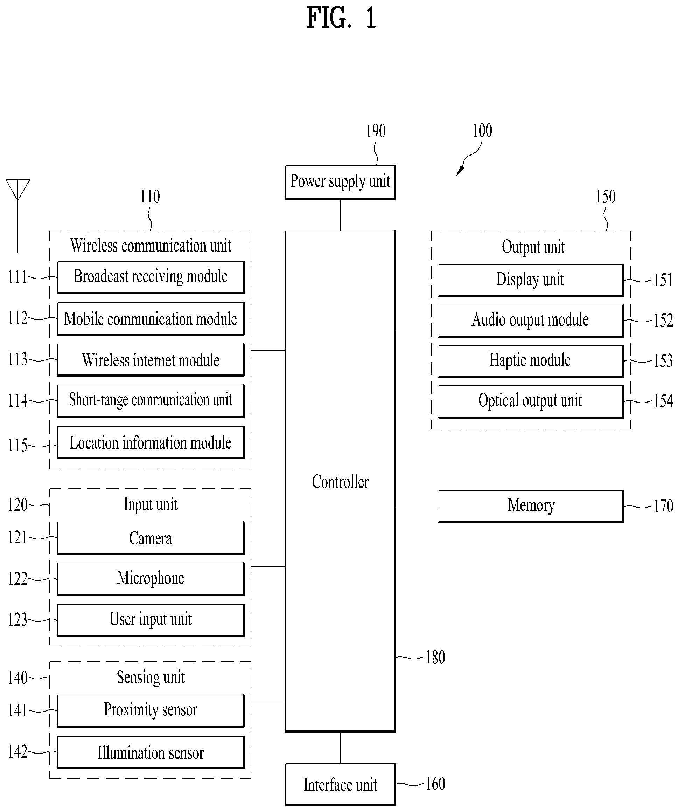

FIG. 1 is a block diagram to describe a smart device related to the present application. A general configuration of the smart device is described with reference to FIG. 1 as follows.

First of all, the smart device 100 may include components such as a wireless communication unit 110, an input unit 120, a sensing unit 140, an output unit 150, an interface unit 160, a memory 170, a controller 180, a power supply unit 190, and the like. It is appreciated that implementing all of the components shown in FIG. 1 is not a requirement, and that greater or fewer components may alternatively be implemented. Moreover, the real shapes and structures of the aforementioned components are not illustrated all but the shapes and structures of some significant components are shown in the drawings following FIG. 1. Yet, it is apparent to those skilled in the art that components described without being illustrated can be included in the smart watch to embody the functions of a smart device.

In particular, among the above-listed components, the wireless communication unit 110 typically includes one or more modules which permit communications such as wireless communications between the smart device 100 and a wireless communication system, communications between the smart device 100 and another smart device, communications between the smart device 100 and an external server. Further, the wireless communication unit 110 typically includes one or more modules which connect the smart device 100 to one or more networks.

To facilitate such communications, the wireless communication unit 110 may include one or more of a broadcast receiving module 111, a mobile communication module 112, a wireless Internet module 113, a short-range communication module 114, and a location information module 115.

The input unit 120 includes a camera 121 (or an image input unit) for an image or video signal input, a microphone 122 (or an audio input unit) for an audio signal input, and a user input unit 123 (e.g., a touch key, a push key (a mechanical key), etc.) for receiving an input of information from a user. Audio or image data collected by the input unit 120 may be analyzed and processed into user's control command.

The sensing unit 140 is typically implemented using one or more sensors configured to sense internal information of the smart device, the surrounding environment of the smart device, user information, and the like. For example, the sensing unit 140 may include at least one of a proximity sensor 141, an illumination sensor 142, touch sensor, an acceleration sensor, a magnetic sensor, a gravity sensor (G-sensor), a gyroscope sensor, a motion sensor, an RGB sensor, an infrared (IR) sensor, a finger scan sensor, a ultrasonic sensor, an optical sensor (for example, the camera 12a), the microphone 12b, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The smart device 100 disclosed in the present specification may be configured to utilize information obtained from the sensing unit 140, and in particular, information obtained from one or more sensors of the sensing unit 140, and combinations thereof.

The output unit 150 is typically configured to output various types of information, such as audio, video, tactile output, and the like. The output unit 150 may include a display unit 151, an audio output unit 152, a haptic module 153, and an optical output module 154. The display unit 151 may have an inter-layered structure or an integrated structure with a touch sensor in order to facilitate a touchscreen. The touchscreen may provide an output interface between the smart device 100 and a user, as well as function as the user input unit 123 which provides an input interface between the smart device 100 and the user.

The interface unit 160 serves as an interface with various types of external devices that can be coupled to the smart device 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the smart watch 100 may perform assorted control functions associated with a connected external device, in response to the external device being connected to the interface unit 160.

The memory 170 is typically implemented to store data to support various functions or features of the smart device 100. For instance, the memory 170 may be configured to store application programs (or applications) run in the smart watch 100, data or instructions for operations of the smart device 100, and the like. Some of these application programs may be downloaded from an external server via wireless communication. Other application programs may be installed on the smart device 100 at time of manufacturing or shipping, which is typically the case for basic functions of the smart device 100 (for example, receiving a call, placing a call, receiving a message, sending a message, and the like). It is common for application programs to be stored in the memory 170, installed on the smart device 100, and launched by the controller 180 to perform operations (or functions) for the smart device 100.

The controller 180 typically functions to control overall operations of the smart device 100, in addition to the operations associated with the application programs. The controller 180 may provide or process information or functions appropriate for a user by processing signals, data, information and the like, which are inputted or outputted by the various components depicted in the above description, or running application programs stored in the memory 170.

Moreover, in order to launch an application program stored in the memory 170, the controller 180 can control at least one portion of the components described with reference to FIG. 1. Furthermore, the controller 180 controls at least two of the components included in the smart device 100 to be activated in combination to launch the application program.

The power supply unit 190 can be configured to receive external power or provide internal power in order to supply appropriate power required for operating elements and components included in the smart device 100. The power supply unit 190 may include a battery. In particular, the battery may include at least one of a built-in battery or a replaceable (or detachable) battery.

At least some of the components can cooperatively operate to implement the operations, controls or controlling methods of the smart device according to various embodiments, which will be described later. In addition, the operations, controls or controlling methods of the smart device may be implemented on the smart device through driving of at least one application program stored in the memory 170.

In the following drawings, the mobile terminal 100 is illustrated as having a body of a bar type. Yet, an example described in the present application is non-limited by the bar type but may have various structures and shapes. For example, the mobile terminal 100 may have a wearable body such as glasses, a watch, a bracelet and a necklace. Thus, configuration for a specific type of the mobile terminal 100 and description thereof may be generally applicable to other types of mobile terminals as well as to the specific type of the corresponding mobile terminal 100.

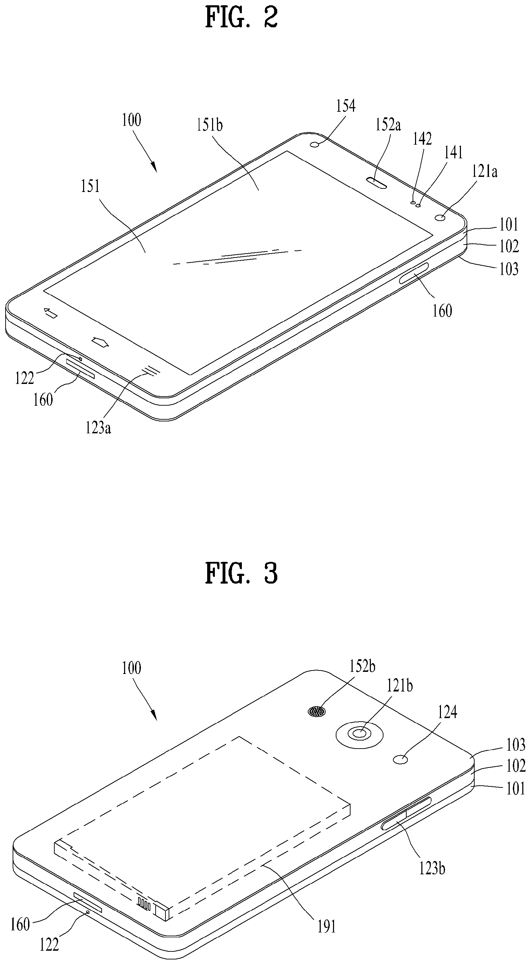

After the above-described general configuration of the mobile terminal 100, the structure of the mobile terminal 100 shall be described in detail with reference to the relevant drawings. Regarding this, FIG. 2 and FIG. 3 are diagrams for one example of a mobile terminal viewed in different directions, respectively. Particularly, FIG. 2 is a perspective diagram showing a front part of the mobile terminal 100, and FIG. 2 is a perspective diagram showing a rear part of the mobile terminal 100. As FIG. 2 and FIG. 3 shows the overall structure of the mobile terminal 100 well, all descriptions always refer to FIG. 2 and FIG. 3 basically unless a drawing to be referred to is mentioned especially.

As described above, the mobile terminal 100 has a body of a bar type overall. A shape of the body can be changed variously if necessary. Here, the body may be understood as the concept of referring to the mobile terminal 100 as at least one assembly. Therefore, all the components described in the following can be described as provided/installed to/in the body of the mobile terminal 100 or included in the body.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may include the display unit 151, a first audio output unit 152a, the second audio output unit 152b, the proximity sensor 141, the illumination sensor 142, the optical output unit 154, a first camera 121a, the second camera 121b, first and second manipulation units 123a and 123b, the microphone 122, the interface unit 160, and the like.

Hereinafter, as illustrated in FIGs. 2 and 3, a description will be given of the exemplary mobile terminal 100 in which the display unit 151, the first audio output unit 152a, the proximity sensor 141, the illumination sensor 142, the optical output unit 154, the first camera 121a, and the first manipulation unit 123a are disposed on the front side of the body of the smart device 100, the second manipulation unit 123b, the microphone 122, and the interface unit 160 are disposed on the side of the body, and the second audio output unit 152b and the second camera 121b are supposed on the rear side of the body.

However, the disposition of the components is not limited thereto. Some components may be omitted, replaced, or located on different sides. For example, the first manipulation unit 123a may not be disposed on the front side of the body of the smart device 100, and the second audio output unit 152b may be disposed on the side of the body other than the rear side of the body.

The display unit 151 displays (outputs) information processed by the mobile terminal 100. For example, the display unit 151 may display execution screen information of an application program launched by the mobile terminal 100 or user interface (UI) and graphic user interface (GUI) information in accordance with the execution screen information. Further, when the mobile terminal 100 is worn on a head of the user using an accessory, the display unit 151 may provide to the user a three-dimensional image for a virtual reality.

The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof. The display unit 151 may include a display module (not shown in the drawing) and the window 151a for covering the display module. The display module can be implemented using the above-described display devices, for example, the LCD, OLED, etc., and it corresponds to the component in charge of displaying image information. The window 151a may be disposed on a portion of the display module, which is exposed to a user, and configured to protect the display module from the outside. In addition to this protection function, the window 151a allows the user to see information displayed on the display module. Thus, the window 151a may be made with a material having proper strength and transparency. In addition, the display module may be directly attached to the rear side of the window 151a. Particularly, various ways can be used to directly attach the display module to the window 151, and as the most convenient way, adhesive may be used for the direct attachment.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

To receive a control command using the touch input system, the display unit 151 may also include a touch sensor (not shown in the drawing) for sensing a touch received at the display unit 151. The touch sensor may use one or more systems among various touch systems such as a resistive system, a capacitive system, an infrared system, a magnetic field system, etc. As one example, as in the resistive and capacitive systems, the touch sensor may be configured to convert change of the pressure applied to a specific point of a touch screen or change of the capacitance occurring at a certain point thereof into an electric input signal. In this case, the touch screen, which corresponds to a touch input device for the smart device, may be configured with the display unit 151 and touch sensor. The display unit 151 can operate as the touch screen corresponding to a user interface and at the same time, display prescribed image information. That is, the display unit 151 may work as not only the output unit 150 but also the input unit 120. When a touch is received at the display unit 151, the touch sensor may sense the touch, and the control unit 180 may generate a control command corresponding to the touch. The contents inputted through the touch system may include letters, numbers, or menus represented or can be represented in each mode.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A).). If necessary, as the user input unit 123, a physical key (e.g., push key) may be additionally provided adjacent to the display unit 151 operating as the touch screen for user convenience.

The first audio output unit 152a may be configured as a receiver for transferring voice to the user's ear, and the second audio output unit 152b may be configured as a loud speaker for outputting various alarm sounds and multimedia play sounds.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

Although it is illustrated in the drawing that the first manipulation unit 123a is implemented as a touch key, the present invention is not limited thereto. For example, the first manipulation unit 123a may be implemented as a push (mechanical) key or a combination of the touch and push keys.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

Each of the manipulation units 123a and 123b may be implemented as a touch input device having the similar structure to the touch screen applied to the display unit 151. However, unlike the touch screen, each of the manipulation units 123a and 123b may be simply configured to receive a command without displaying image information, and in this case, the touch input device applied to such a manipulation unit can be referred to as a touch pad.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities. Similarly, the first camera 121a may be implemented as the array camera.

A flash 124 is shown adjacent to the second camera 121b. When an image of a subject is captured with the camera 121b, the flash 124 may illuminate the subject.

The second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body.

The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

The mobile terminal 100 may include a board, i.e., a printed circuit board (not shown in FIG. 2 or FIG. 3), installed in the body, and more particularly, in the case 102/103. On the board, various electronic parts, and more particularly, the controller 180 and the like are mounted together with other circuits and devices that support the controller 180. The controller 180 may include a microprocessor. The microprocessor is the assembly of circuits controlling that mobile terminal 100 and may include a multitude of sub-circuit assemblies, which are distinguished from each other structurally and functionally according to control operations, i.e., a multitude of modules. The respective components 110 to 190 shown in FIG. 1 are electrically connected to the board in a manner of being directly mounted on the board or installed in the body of the mobile terminal 100, thereby being controlled by the controller 180. For example, the window 151 (i.e., touch sensor) and the display module can be connected to the board through wirings despite being externally exposed, respectively. Thus, the controller 180 installed in the board is electrically connected all the components, thereby being capable of controlling them. For this reason, the controller 180 can be called various names such as a control unit, a controlling device and the like and control all the components of the mobile terminal 100. The controlled components include not only the components shown in FIGs. 1 to 3 but also other components that will be described separately in the following despite being omitted from the drawings. Therefore, the controller 180 may become a substantial component that performs a control method of the present application appropriately by controlling operations of other components. For this reason, all substeps performed in the control method of the present application may become the features of the controller 180.

An accessory for protecting an appearance or assisting or extending the functions of the mobile terminal 100 can be also provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

In some implementations, in order to provide an intended function to a user, the aforementioned mobile terminal 200 has a structure that enables connectivity to a network and ubiquitous computing as a smart device. Yet, to provide further improved functions, the mobile terminal 100 needs to be supported by an appropriate control in consideration of the structure and features thereof. Moreover, the mobile terminal 100 is basically accompanied by interaction with a user in implementing an intended function. Hence, optimization of various controls can achieve the improvement of user environment and user interface more effectively and efficiently as well as the intended functional improvement. Furthermore, such user experiences of the mobile terminal 100 as use facilitation, use convenience and the like can be remarkably improved by the optimized control. For this reason, a control method for the mobile terminal 100 shown in FIGs. 1 to 3 is developed and shall be described with reference to the relevant drawings in addition to FIGs. 1 to 3. Unless there are especially contrary explanations, FIGs. 1 to 3 and the descriptions with reference to them are basically included in and referred to by the following description and drawings. Yet, the following control method is not provided only for one embodiment of the mobile terminal shown in FIGs. 1 to 3. The following control method is applicable to all mobile terminals that implement the basic concept of the mobile terminal shown in FIGs. 1 to 3, and it is obvious to those skilled in the art that such applications entirely pertain to the scope of rights of the present invention.

Control methods described in the following can control operations of the components (i.e., various parts) described with reference to FIGs. 1 to 3 and provide intended functions based on such operations. Therefore, the operations and functions related to the control method can be regarded not only as the features of the control method but also as the features of the relevant structural components. Particularly, the controller or processor 180 can be called various names such as a control unit, a controlling device and the like and control all components of the mobile terminal 100 to perform a prescribed operation. Therefore, the controller 180 substantially controls all methods and modes described in the following in the present application, whereby all the steps in the following may become the features of the controller 180. For this reason, although not described as performed by the controller 180 or the mobile terminal 100, all the steps and sub-features thereof should be understood as the features of the controller 180. Moreover, a structural aspect and a corresponding operation in the following description of a control method refer to the description with reference to FIGs. 1 to 3, whereby their details shall be omitted.

As discussed above, a memo function among many functions of a mobile terminal enables a user to record simple informations for the later reference. A substance of a memo is related to a job or a task a user should do later in general, and such jobs can be performed mostly using the mobile terminal 100. A user can do a desired job in the mobile terminal 100 by referring to a substance of a memo. Therefore, if a substance of a memo is substantially linked to a function of the mobile terminal 100, a user can use the mobile terminal more conveniently. For this purpose, the mobile terminal 100 can be controlled for the linkage between a substance of a memo and a function of the terminal.

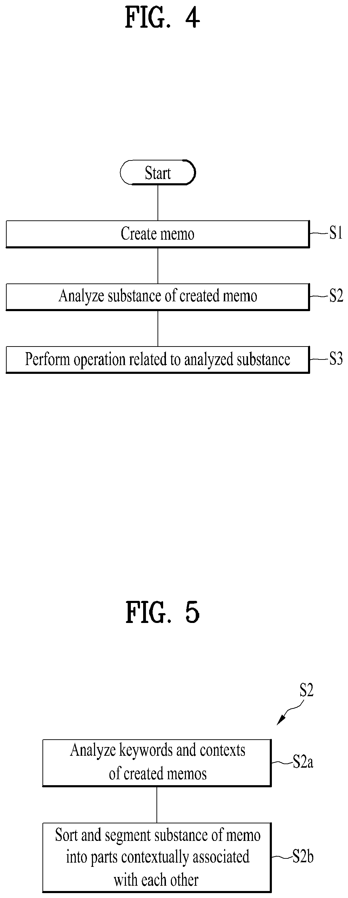

FIG. 4 is a flowchart for one example of a method of controlling a mobile terminal described in the present application. FIG. 5 is a flowchart showing an analyzing step of FIG. 4 in detail. With respect to the linkage between a memo substance and a terminal function, a control method of the present application is described in detail as follows with reference to FIG. 4 and FIG. 5.

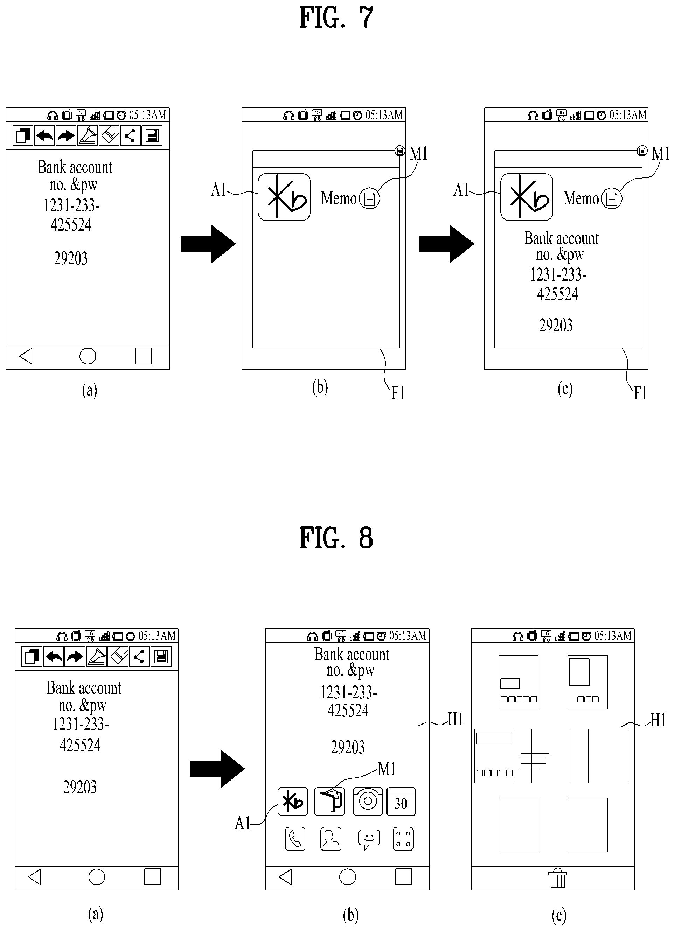

First of all, a user can create a memo using the mobile terminal 100 [S1]. As shown in FIG. 7 (a), FIG. 8 (a) and FIG. 9 (a), the user can create a memo using a memo application installed on the mobile terminal 100. After executing the memo application, the user can input a desired substance as a memo through a virtual or physical keyboard provided by the mobile terminal 100, a stylus, or a voice. Hence, the creating step S1 can be described as the mobile terminal 100 receives a user input and then creates a substance corresponding to such an input. If the memo creation is completed, the created memo can be stored in the mobile terminal 100 for a later use.

Thereafter, the mobile terminal 100 can analyze the substance of the created memo [S2]. In this analyzing step S2, for the linkage between a function of the mobile terminal 100 and the memo, the mobile terminal 100 can search and sort the substances of memos with reference to a function the mobile terminal 100 can provide. As a function of the mobile terminal is mostly provided by an application installed on the mobile terminal 100, the mobile terminal 100 can substantially search and sort substances of memos with reference to applications installed on the mobile terminal 100, and more particularly, to types of the applications. In particular, the mobile terminal 100 can extract a keyword from the substance of the memo [S2a]. Moreover, the mobile terminal 100 can analyze a content of the substance of the memo, i.e., the contents of sentences contained in the memo [S2a]. Moreover, a single memo may include parts distinguishable from each other according to a function of the mobile terminal 100, i.e., a configuration and type of an application. For example, a single memo may include both a substance (i.e., a schedule function and an application) for an approaching appointment and a function (i.e., a call function and application) for a notification of an appointment using a phone. Therefore, based on the analyzed keyword and text, the mobile terminal 100 can distinguish and segment the substance into parts associated with each other in the keyword and/or the context [S2b]. As described above, since the keyword and context are obtained from the analysis based on the function of the mobile terminal 100 and the type of the application, the parts of the memo based on the keyword and context can be regarded as segmented according to the terminal function and the application type. Namely, all the segmented parts of the memo substance may have high correlation to the corresponding functions and application. Hence, the segmented parts may be useful for the control of the mobile terminal 100 based on the analyzed substance of the memo. Moreover, the result obtained from the analyzing step S2, i.e., the analyzed keyword/context and the segmented parts are directly applicable to various control methods described in the following and can be stored in the mobile terminal 100, e.g., the memory 170 so as to be referred to later.

Thereafter, the mobile terminal 100 can perform an operation related to the analyzed substance of the memo [S3]. As discussed above, the mobile terminal 100 executes a relevant application to perform a prescribed operation. Hence, through the performing step S3, the mobile terminal 100 can substantially link the substance of the memo to the relevant application, i.e., the function of the mobile terminal 100, whereby a user can use the mobile terminal 100 more conveniently. If the creation of the memo is completed, the aforementioned analyzing and performing steps S2 and S3 can be automatically executed in direct. Yet, these steps S2 and S3 are identically applicable to previously created memos.

In such a step S3, various kinds of operations can be performed. For example, a memo can be gathered at a prescribed location together with an application related to a substance of the memo. As discussed above, a user can refer to a relevant memo substance when an application is running. For example, when making a call, a user can refer to a phone number recorded in a memo. Generally, a memo and application can be manipulated through a user interface (mainly, a virtual interface) of the mobile terminal 100. Hence, if a memo and an application are spaced apart from each other within an interface, a user should perform many manipulations to refer to the memo after executing the application, whereby a user may be inconvenient. For this reason, a memo and a relevant application can be disposed at a prescribed location of such a user interface. As one example of the performing step S3 of the basic control method of FIG. 4, the present application provides a control method S10 for such disposition, which is described in detail with reference to the relevant drawings as follows.

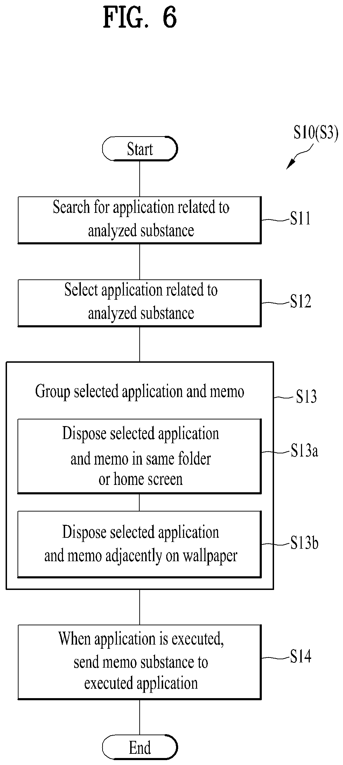

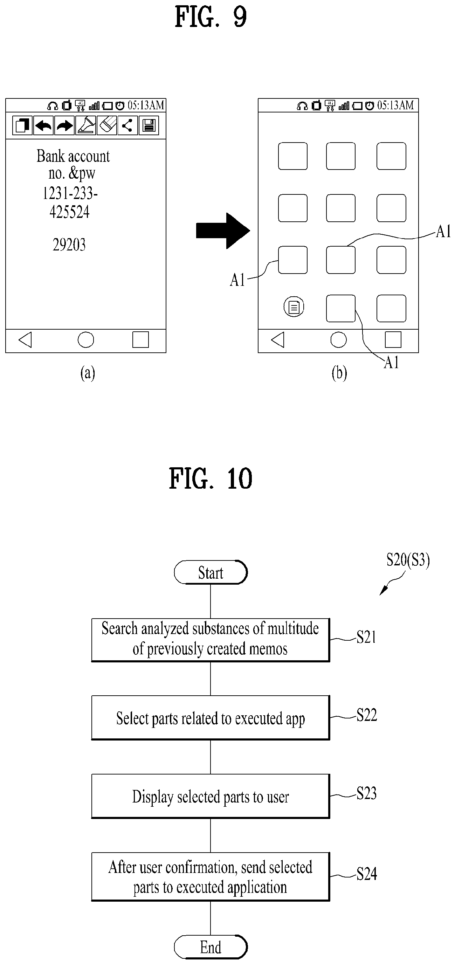

FIG. 6 is a flowchart showing a method of grouping a memo and application for example of the performing step of FIG. 4 in detail. FIG. 7 is a schematic diagram of disposing a memo and application in the same folder as an actual example of the grouping of FIG. 6. FIG. 8 is a schematic diagram of disposing a memo and application on the same home screen as an actual example of the grouping of FIG. 6. And, FIG. 9 is a schematic diagram of disposing a memo and application on a wallpaper as an actual example of the grouping of FIG. 6.

First of all, the mobile terminal 100 can search for an application related to an analyzed memo substance [S11]. As shown in the actual examples of FIG. 7 (a), FIG. 8 (a) and FIG. 9 (a), a user creates a memo [S1], if a substance of a memo is analyzed by the user equipment 100 [S2], the mobile terminal 100 can search for an application, which can be functionally linked to the substance, based on the analyzed substance. This search may be performed on applications previously installed on the mobile terminal 100. For example, if an analyzed keyword and context include a date, schedule, appointment and the like, the mobile terminal can search previously installed schedule or calendar applications. If an analyzed keyword and context include a text, a call and a phone number, the mobile terminal 100 can search the previously installed text and call applications. Moreover, as shown in the actual examples of FIG. 7 (a), FIG. 8 (a) and FIG. 9 (a), if an analyzed keyword and context include a bank, account, transfer, account number, password and the like, the mobile terminal 100 can search previously installed financial or banking applications. Thereafter, the mobile terminal 100 can select an application related to the analyzed memo substance [S12]. Namely, the mobile terminal 100 can finally determine an application best matching the analyzed memo substance among the searched applications. For example, since a memo including a bank account number and password is created in FIG. 7 (a), the mobile terminal 100 can finally select a bank application A1. If a multitude of applications match the analyzed memo substance well, the mobile terminal 100 can select them all.

After the selecting step S12, the mobile terminal can group the selected application and the memo together based on the analyzed substance [S13]. As discussed above already, the memo and the selected application are substantially gathered to a prescribed location of a user interface, thereby being disposed at the prescribed location together. Moreover, for the facilitation of user's manipulation, the memo and application may exist as shortcuts or icons within the user interface. Hence, in the grouping step S13, the mobile terminal 100 can substantially group an icon of the memo and an icon of the application together. Moreover, in such a grouping, the mobile terminal 100 may use an icon of a memo application or a shortcut of icon of a memo file created in the memo application. For this reason, a memo and application included in the description of the present application mean their icons together, whereby a memo and an application in the following description may be changed into an icon of a memo and an icon of an application, respectively.

Particularly, in the grouping step S13, the mobile terminal 100 can dispose the selected application and the memo in the same folder or home screen [S13a]. For example, a selected bank application A1 and a memo M1, a shown in FIG. 7 (b), can be disposed in the same folder F1. If the folder F1 containing the bank application A1 is formed already, the mobile terminal 100 may simply add the memo M1 to the folder F1 only. Moreover, irrespective of whether the folder F1 exists already, the mobile terminal 100 may create a new folder F1 and dispose the selected application A1 and the memo M1 together in the created folder F1. Moreover, as shown in FIG. 7 (c), the mobile terminal 100 may display a substance of the memo M1 in the folder F1. Hence, if the folder F1 is open, as the substance of the memo M1 is displayed directly, a user can do a relevant job or task more conveniently.

A user interface of the mobile terminal 100 can provide a home screen separately from a wallpaper or a desktop. The home screen provides functions similar to those of the wallpaper, and may be customized according to user's taste. Namely, a user can dispose a user-desired function, i.e., an icon and widgets for such a function within a single home screen separately, and a multitude of home screens may be created if necessary. If a lock screen is released in general, a user can enter a home screen and then enter a wallpaper (desktop) from the home screen. Hence, like a folder, a home screen provides an environment good for grouping. Hence, the selected bank application A1 and the memo M1, as shown in FIG. 8 (b), can be disposed within the same home screen H1 [S13a]. If the home screen H1 containing the bank application A1 is already formed, the mobile terminal 100 can simply add the memo M1 to the home screen H1 only. Moreover, irrespective of whether the home screen H1 exists already, the mobile terminal 100 may create a home screen H1 and dispose the selected application A1 and the memo M1 together in the created home screen H1. Moreover, as shown in FIG. 7 (b), the mobile terminal 100 may display a substance of the memo M1 in the home screen H1. Hence, if the home screen H1 is open, as the substance of the memo M1 is displayed directly, a user can do a relevant job more conveniently.

Alternatively, for the grouping, the mobile terminal 100 can dispose the selected application and the memo on the wallpaper adjacently [S13b]. For example, as shown in FIG. 9 (b), the selected application A1 and the memo M1 can be adjacently disposed on the wallpaper D1. Particularly, the selected application A1 can be disposed at any one of top, bottom, right and left sides of the memo M1. Moreover, the mobile terminal 100 can display the substance of the memo M1 within the wall paper. For user's convenience, the mobile terminal 100 may create a window in prescribed size within the wallpaper and display the substance of the memo M1 within the window.

Through the aforementioned grouping step S13, the memo, i.e., the icon of the memo can be disposed adjacent to a relevant application, i.e., an icon of the application. Hence, when the user executes the application, the user can easily access the memo and use the mobile terminal 100 more conveniently.

Moreover, once the grouped application is executed, the mobile terminal 100 may send the substance of the memo to the executed application [S14]. For example, in FIGs. 7 to 9, if the back application A1 is executed, the mobile terminal 100 can transmit the substance of the memo M1, i.e., an account number and password to the executed application A1. Such a transmission may be automatically performed if the application A1 is executed or performed after user's grant. Moreover, the transmitted substance of the memo M1 can be automatically copied to a corresponding input window of the application A1. On the other hand, the substance of the memo M1 transmitted for user's review is first shown to the user through a separate window and can be then inputted to the corresponding input window if the user grants the input. By the transmission and input, the user can use the mobile terminal 100 more conveniently.

Meanwhile, as discussed already, a single memo may simultaneously include a multitude of parts distinguishable from each other according to for and type of an application, e.g., parts for calls, appointments and finances. In this case, the mobile terminal 100 can group the memo containing all of a multitude of the parts with a relevant application. On the other hand, since the parts are already distinguished in the analyzing step S2, the mobile terminal 100 may extract only a part related to the selected application from the substance of the memo and then group the extracted part with the application [S13]. In this case, the mobile terminal 100 creates a corresponding part in the substance of the memo as a separate memo file and is able to group the created mem file, i.e., an icon of the created memo file with the selected application. Moreover, if a memo containing all distinguishable parts is grouped with a relevant application, only a part related to the grouped application can be displayed on the open folder F1, the home screen H1, and a window of the wallpaper. Furthermore, in this case, in the sending step S14, the mobile terminal 100 may send only a part related to the executed application in the substance of the memo to the application as well.

In addition to the aforementioned control method S10, for one example of the performing step S3, if a prescribed application is executed, a substance of a relevant memo can be send to the executed application. Hence, like the above control method S10, the mobile terminal 100 can substantially link a substance of a memo to a relevant application, i.e., a function of the mobile terminal 100. The present application provides a control method S20 for such a sending, which is described in detail with reference to the relevant drawings as follows.

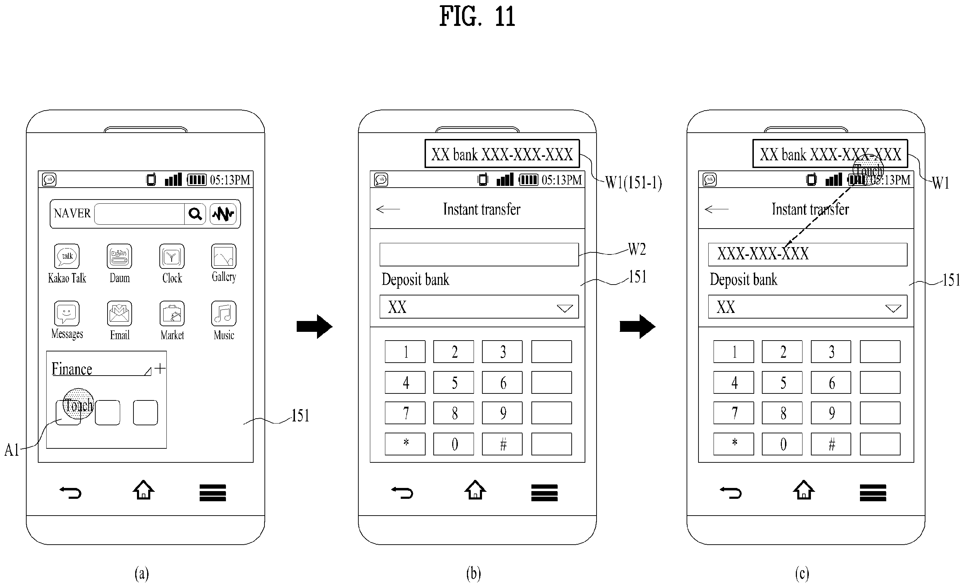

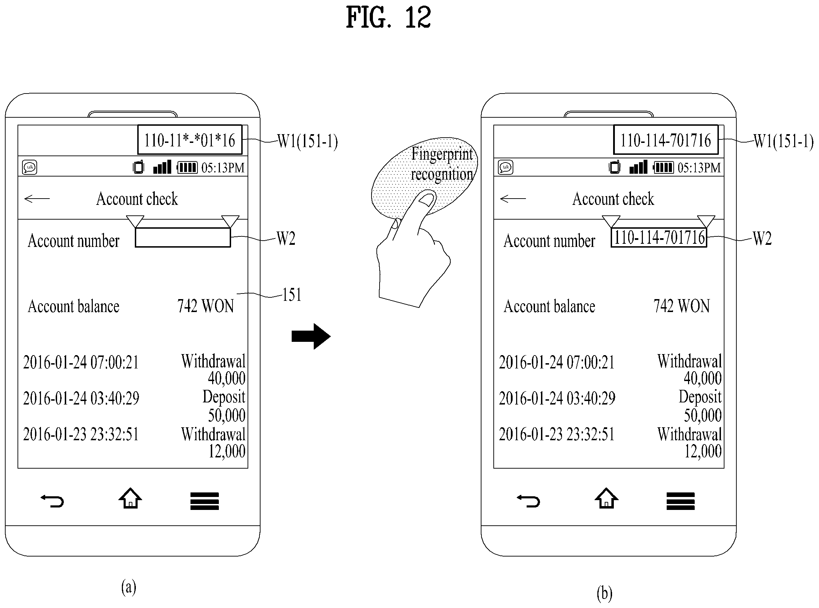

FIG. 10 is a flowchart of a method of bringing a substance of a relevant memo when an application is executed as one example of the performing step of FIG. 4. FIG. 11 and FIG. 12 are schematic diagrams showing an actual example of a control method according to FIG. 10.

First of all, if a prescribed application is executed, the mobile terminal 100 can search an analyzed substance of a previously created single memo or analyzed substances of a multitude of memos [S21]. As shown in the actual examples of FIG. 7 (a), FIG. 8 (a) and FIG. 9 (a), if a user creates a memo [S1] and a substance of the memo is analyzed by the mobile terminal 100 [S2], the mobile terminal 100 obtains a result according to the performed analysis in advance. Hence, as shown in FIG. 11 (a), for example, if a user executes a bank application A1, such an analysis result may be searched to discover a substance of a memo related to the executed application A1. As described above, in the analyzing step S2, the mobile terminal can extract a keyword and analyze a context, with reference to applications. Moreover, the mobile terminal 100 can segment a substance of a memo into a multitude of parts according to an application. Hence, indexes can be directly given to such analysis results according to a type of the application. For this reason, the mobile terminal 100 can easily search the substance of the memo related to the executed application and the segmented parts thereof. Thereafter, the mobile terminal 100 can select a portion of the memo related to the executed application [S22]. Namely, the mobile terminal 100 can finally determine parts best matching the executed application in the searched substance of the memo. For example, in FIG. 11 (a), as a bank application A1 is executed, a bank account number and password contained in a memo can be selected.

After the selecting step S22, the mobile terminal 100 can first display the selected parts of the memo for a user [S23]. Although parts having high relativeness may be extracted through the searching and selecting steps S21 and S22, there still exists a probability of failing to match the executed application perfectly. Hence, as the selected parts are displayed by the mobile terminal 100, they can be verified by the user. For example, as shown in FIG. 11 (b), the mobile terminal 100 may create a separate window W1 within a user interface and display the selected parts within the window W1. Moreover, the mobile terminal 100 may include an auxiliary display 151-1 in addition to the display unit 151 and display the selected parts within the auxiliary display 151-1. For example, as shown in FIG. 11 (b), an account number selected for user's check may be displayed within the window W1 or the auxiliary display 151-1. Moreover, as shown in FIG. 12 (a), if the selected part requires security like an account number, the account number may be partially displayed within the window W1 or the auxiliary display 151-1. Hence, as shown in FIG. 12 (b), if a prescribed authentication step such as fingerprint recognition is performed, the account number can be entirely displayed within the window W1 or the auxiliary display 151-1 so as to be checked by the user.

Thereafter, the mobile terminal 100 may send the selected part to the executed application [S24]. For example, as shown in FIG. 11 (c) and FIG. 12 (b), the mobile terminal 100 can send the selected part of the memo M1, i.e., the account number to the executed bank application A1. Particularly, before the sending, the user can check the displayed parts through the displaying step S23. If the displayed parts are determined as appropriate, the user may approve the sending to the executed application. Such an approval may consist of several mechanisms and can be simply performed, as shown in the drawing, in a manner of touching a corresponding part. Moreover, the sent part of the memo can be automatically copied to a corresponding input window W2 of the application A1, whereby a user can use the mobile terminal 100 more conveniently.

In addition to the control methods S10 and S20, for example of the performing step S3, if a memo is created, an application related to a substance of the memo can be directly executed. Hence, the mobile terminal 100 can directly link the substance of the memo to a relevant application, i.e., a function of the mobile terminal 100. The present invention provides a control method S30 for such a direct execution, which is described in detail with reference to the relevant drawings as follows.

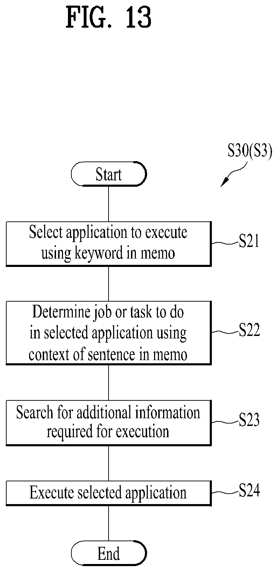

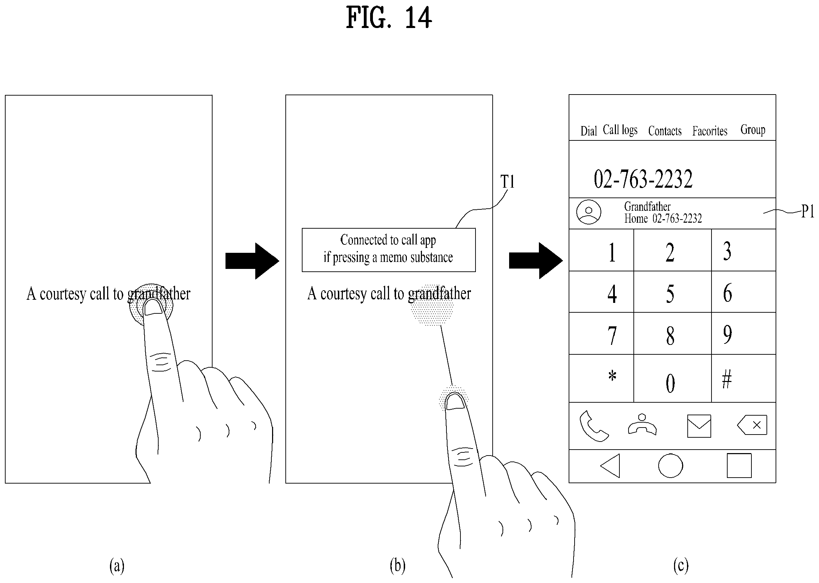

FIG. 13 is a flowchart showing a method of if a memo is created, executing an application related to the memo, in detail, as one example of the performing step of FIG. 4. FIG. 14 is a schematic diagram showing an actual example of a control method according to FIG. 13.

First of all, as shown in the actual examples of FIG. 14 (a) and FIG. 14 (b), if a user creates a memo [S1] and the mobile terminal 100 analyzes a substance of the created memo [S2], the mobile terminal 100 can obtain a result according to the analysis, i.e., an analysis of a keyword and context in advance. Thereafter, the mobile terminal 100 can select an application to execute using a keyword in the memo [S31]. For example, as shown in FIG. 14 (a) and FIG. 14 (b), the mobile terminal 100 can extract a keyword 'call' from the created memo and then select a call application as an application to execute from the extracted keyword. Subsequently, the mobile terminal 100 can determine a job or a task to perform in the selected application through a context of the memo substance [S32]. For example, as shown in FIG. 14 (a) and FIG. 14 (b), the mobile terminal 100 can infer the necessity to make a phone call to grandfather out of the created memo and then determine a detailed job (i.e., 'call to grandfather') to execute in the call application, which is an application to be executed, based on the inferred context.

Meanwhile, although the created memo may contain all information required for an application to be executed and a job to be performed, several informations may be missing from the memo frequently. Hence, the mobile terminal 100 can additionally search for such missing informations [S33]. In this searching step S33, in order to find the missing information, the mobile terminal 100 can search a database stored therein, another external device, or a network. For example, as shown in the example of FIG. 14 (c), the created memo does not contain a phone number of grandfather substantially. Hence, the mobile terminal 100 can extract the grandfather's phone number P1 by searching a phone number database stored therein.

Thereafter, the mobile terminal 100 can execute the application selected to perform the determined job [S34]. For example, as shown in FIG. 14 (c), the mobile terminal 100 can make a phone call to grandfather using the extracted phone number P1. Such a control method S31 to S34 can be directly executed if the memo creation is completed. Alternatively, the control method S31 to S34 may be performed by user's additional instruction or approval. For example, the user can directly specify and execute an application and job related to the created memo by simply touching a memo substance, as shown in FIG. 14 (a), or by swiping after the touch, as shown I FIG. 14 (b). Moreover, the mobile terminal 100 may guide a user's approval and instruction for the execution of a relevant application. For example, as shown in FIG. 14 (b), the mobile terminal 100 can display a text T1, which guides user's approval and instruction, on the display unit 151. The text T1, as shown in the drawing, may be displayed together with the memo substance within an interface of an executed memo application or a window or interface separate from the memo application. Moreover, in order to induce the user's approval and instruction, the mobile terminal 100 may provide information on the executed application and the job to be performed through the text T1 in advance. To provide such information, the above steps S31 and S32 may be performed in advance.

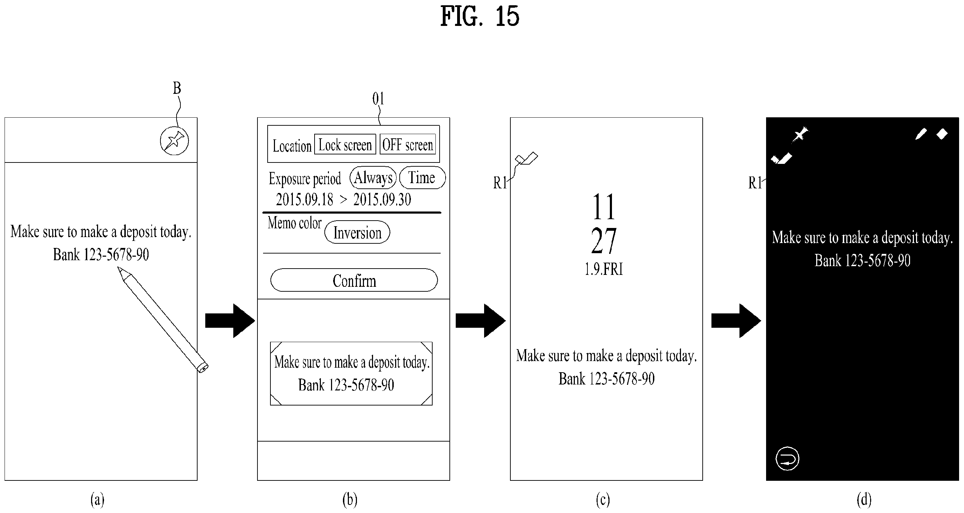

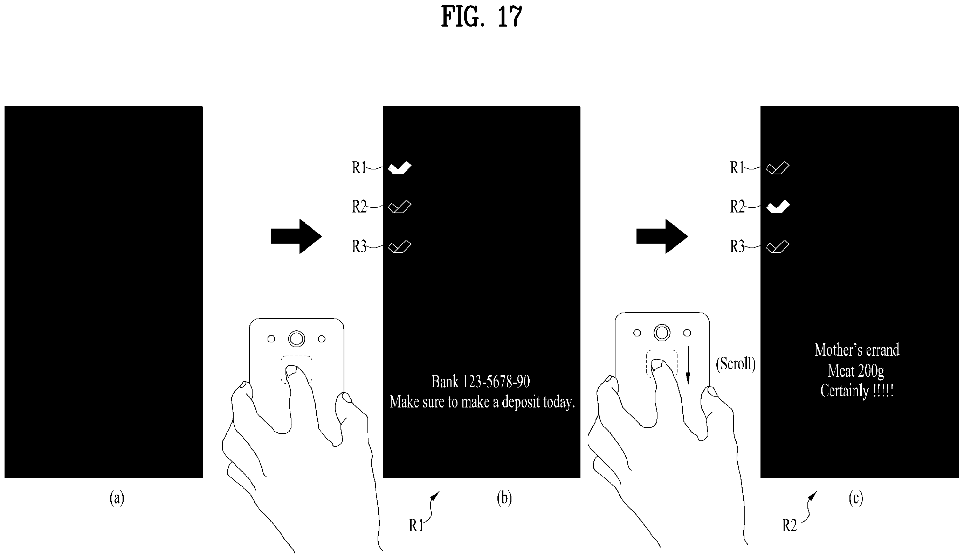

In some implementations, a substance of a memo can be viewed in general if a memo application is executed. In order to execute the memo application, it is necessary to activate the mobile terminal 100 and release a displayed lock screen. Hence, many manipulations necessary to view a memo may cause inconvenience to a user. For this reason, it is necessary to dispose a created memo to facilitate a user's access. As described above, a lock screen and an OFF screen of the mobile terminal 100 may correspond to initial screens in a user interface. Hence, as shown in FIG. 15, the mobile terminal 100 can dispose a created memo on a lock screen and/or an OFF screen to facilitate user's access. The OFF screen is a screen displayed when the mobile terminal 100 is deactivated. As shown in FIG. 17 (a), any object is not displayed on the OFF screen in general. Particularly, if a user completes creation of a memo, the mobile terminal 100 can save the created note as a file [FIG. 15 (a)] and dispose the created memo on the lock screen or the OFF screen [FIG. 15 (c) and FIG. 15 (d)]. Substantially, an icon R1 of the memo may be disposed on the lock or OFF screen. Moreover, in order for a user to recognize a substance of a memo directly, the substance of the memo may be displayed on the lock or OFF screen as soon as it is disposed. Such disposition can be directly executed if the creation of the memo is completed. Alternatively, the disposition may be performed by user's additional instruction or approval. Particularly, as shown in FIG. 15 (a), if a specific button B in a memo application is pressed, a created memo can be directly disposed as an icon on a lock or OFF Screen. Moreover, the mobile terminal 100 can provide a user with an option for determining whether to dispose the created memo on the lock screen or the OFF screen. As shown in FIG. 15 (b), the mobile terminal 100 can provide an option 01 configured to determine whether to dispose a memo on which screen, as an interface of a memo application, to the mobile terminal. If a user selects the lock screen from the option 01, as shown in FIG. 15 (c), the mobile terminal 100 can dispose the created memo on the lock screen. If a user selects the OFF screen from the option 02, as shown in FIG. 15 (d), the mobile terminal 100 can dispose the created memo on the OFF screen.

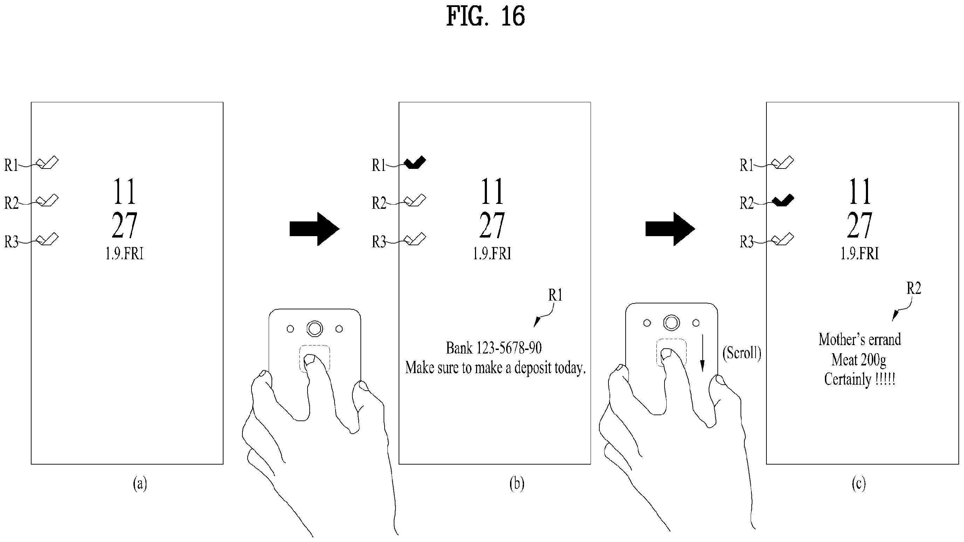

Moreover, as shown in FIG. 16 and FIG. 17, the mobile terminal 100 may display substances of the disposed memos R1 to R3 on the lock or OFF screen. Since the OFF screen and the lock screen may be directly exposed to a third party as well as to a user, security may be requested in order to display the substances of the memos to them. Hence, as shown in FIG. 16 (b) and FIG. 17 (b), authentication (e.g., fingerprint recognition) of a user may be performed before displaying substances of a memo. Moreover, as shown in FIG. 16 (c) and FIG. 17 (c), the disposed memos R1 to R3 may be sequentially displayed on the lock screen or the OFF screen.

As a memo is disposed and displayed on a lock screen or an OFF screen according to the control method shown in FIGs. 15 to 17, a user can access a substance of the memo quickly and conveniently.

It will be appreciated by those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal, comprising:
a display configured to display various kinds of informations;
a communication device configured to communicate with an external device or a network; and
a controller connected to the display and the communication device,
wherein the controller is configured to analyze a substance of a created memo and perform an operation related to the analyzed substance.

2. The mobile terminal of claim 1, wherein the controller analyzes a keyword and context of the substance of the memo.

3. The mobile terminal of claim 1, wherein the controller is configured to segment substances of the memo into parts associated with each other contextually.

4. The mobile terminal of claim 1, wherein the controller is configured to group an application relevant to the substance of the memo together with the memo based on the analyzed substance.

5. The mobile terminal of claim 4, wherein the controller is configured to dispose the application relevant to the analyzed substance and the memo in a same folder or home screen.

6. The mobile terminal of claim 4, wherein the controller is configured to adjacently dispose the application relevant to the analyzed substance and the memo on a wallpaper.

7. The mobile terminal of claim 5, wherein the controller is configured to add the memo to a folder having the relevant application disposed therein or create a new folder to dispose the relevant application and the memo therein.

8. The mobile terminal of claim 4, wherein the controller is configured to group only a part relevant to the application in the substance of the memo with the application.

9. The mobile terminal of claim 4, wherein if the grouped application is executed, the controller sends the substance of the grouped memo to the executed application.

10. The mobile terminal of claim 9, wherein the controller is configured to send only a part relevant to the executed application in the substance of the grouped memo to the executed application.

11. The mobile terminal of claim 1, wherein if an application is executed, the controller searches analyzed substances of a previously created memo and then sends parts relevant to the executed application to the executed application.

12. The mobile terminal of claim 11, wherein after searching the analyzed substances, the controller first displays the parts to send for a user.

13. The mobile terminal of claim 1, wherein the controller directly executes an application relevant to the substance of the memo based on the analyzed substance.

14. The mobile terminal of claim 13, wherein the controller selects the application to execute using a keyword of the memo substance and determines a job to be performed in the application through a context of the memo substance.

15. The mobile terminal of claim 13, wherein the controller additionally searches for information, which is missing from the memo, required for the execution of the application.

16. The mobile terminal of claim 1, wherein the controller is configured to dispose the created memo on a lock screen or a turned-off screen.

17. The mobile terminal of claim 16, wherein the controller is configured to display substances of the disposed memos on the lock screen or the turned-off screen.
